# EUROPEAN PATENT APPLICATION

(11) **EP 3 384 762 A1**
(43) Date of publication of application: **10.10.2018**
(21) Application number: 18165904.6
(22) Date of filing: 05.04.2018
(51) Int. Cl.: A01K 1/015

(54) **STALL FLOOR ASSEMBLY**

(30) Priority: 05.04.2017 US 201762481835 P
(71) Applicant: Ani-Mat Inc., Sherbrooke, Québec J1R 0S6 (CA)
(72) Inventor: SAVARY, Pierre, Sherbrooke, Québec J1R 0S6 (CA)
(74) Representative: Brevalex

(57) **Abstract**

A stall floor assembly for an animal bedding installation is provided. The assembly includes a front end and a rear end and a plurality of floor sections. The plurality of floor sections is assembled together to form an inclined support surface. The inclined support surface forms a substantially continuous slope from the front end to the rear end of the assembly.

## Description

### TECHNICAL FIELD

The technical field generally relates to animal housing including animal bedding installations and/or passages, and more particularly concerns a stall floor assembly for such animal bedding installations and/or passages.

### BACKGROUND

Cows are typically kept in a housing designed for cows instead of lying down in a pasture. One challenge associated with this practice is that floors of barns are normally made from a hard material. For example, the floors can be made of concrete, which is uncomfortable for the cows and can result in injuries and loss and/or reduction of milk production.

Different approaches have been suggested to provide cows with a more comfortable bedding assembly. For instance, the floors can be covered with a bag containing straws. Another approach is to provide on the floors a layer of comminuted rubber covered with a blanket.

There is thus a need for a stall floor assembly that addresses at least some of the challenges presented above.

### SUMMARY

In accordance with one aspect, there is provided a stall floor assembly for an animal housing including bedding installations and/or passages. The assembly includes a plurality of floor sections. The plurality of floor sections is assembled together to form an inclined support surface having a front end and a rear end, and the inclined support surface forms a substantially continuous slope from the front end to the rear end of the stall floor assembly.

In one embodiment, the slope is comprised between 0.5 and 6%.

In one embodiment, each floor section is made of a mesh structure. The mesh structure forms a network of contiguous cells.

In one embodiment, each floor section includes an abutment structure configured to abut against a stall floor.

In one embodiment, the abutment structure includes a plurality of feet projecting from the mesh structure opposite the inclined support surface.

In one embodiment, each floor section includes two opposite lateral sides, at least one male connector and at least one female connector. The at least one male connector is provided on one of the two opposite lateral sides, and the at least one female connector is provided on another one of the two opposite lateral sides. The at least one male connector and the at least one female connector of laterally adjacent floor sections are engaged together.

In one embodiment, the plurality of floor sections is assembled into first and second coterminous rows.

In one embodiment, the floor sections of the first row each have a rear boundary provided with at least one male connector and the floor sections of the second row each have a front boundary provided with at least one female connector engaged with the at least one male connector of a neighboring floor section of the first row.

In one embodiment, the first row of floor sections and the second row of floor sections each includes four floor sections.

In one embodiment, each floor section is made of a polyethylene thermoplastic material.

In one embodiment, the assembly further includes a mattress provided on the inclined support surface.

In one embodiment, the mattress has a top surface, and the assembly further includes a protective layer provided on the top surface of the mattress.

In one embodiment, the assembly further comprises a plurality of clips. Each clip is engaged with a pair of adjacent floor sections.

In one embodiment, the protective layer has one terminal edge and the assembly further includes a positioning band mounted on the inclined support surface for engaging the terminal edge with the inclined support surface.

In one embodiment, the assembly includes first and second subsets of the floor sections. The first and second subsets are disposed in a mirror configuration contiguously along their rear ends.

Other features and advantages of the present description will become more apparent upon reading of the following non-restrictive description of specific embodiments thereof, given by way of example only with reference to the accompanying drawings.

### BRIEF DESCRIPTION OF THE DRAWINGS

Figure 1 illustrates an assembled stall floor assembly according to one embodiment.
Figure 2 illustrates an disassembled stall floor assembly according to one embodiment.
Figure 3A and 3B illustrate a floor section according to one embodiment.
Figures 4A and 4B illustrate a floor section according to one embodiment.
Figure 5 illustrates a top left perspective view of a floor section according to one embodiment.
Figure 6 illustrates a top right perspective view of the floor section illustrated in Figure 5.
Figure 7 illustrates an enlarged view of a front portion of a floor section according to one embodiment.
Figure 8 illustrates a bottom view of a first row of floor sections about to be engaged with a second row of floor section, according to one embodiment.
Figure 9 illustrates clips attaching two adjacent floor sections according to one embodiment.
Figure 10 illustrates clips attaching neighbouring floor sections according to one embodiment.
Figure 11 illustrates a positioning band according to one embodiment.
Figure 12 illustrates a positioning band according to another embodiment.
Figure 13 illustrates a positioning band according to another embodiment.
Figure 14 illustrates a positioning band according to another embodiment.
Figure 15 illustrates a positioning band according to another embodiment.
Figure 16 illustrates a positioning band according to another embodiment.
Figure 17 illustrates a positioning band according to another embodiment.
Figure 18 illustrates a positioning band according to another embodiment.
Figure 19 illustrates a positioning band according to another embodiment.
Figure 20 illustrates a positioning band according to another embodiment.
Figure 21 illustrates a positioning band according to another embodiment.
Figure 22 illustrates a positioning band according to another embodiment.
Figure 23 illustrates a positioning band according to another embodiment.
Figure 24 illustrates a stall floor assembly according to one embodiment.
Figure 25 illustrates another view of the stall floor assembly of Figure 24.
Figure 26 illustrates a stall floor assembly mounted in a passage according to one embodiment.

### DETAILED DESCRIPTION

In the following description, similar features in the drawings have been given similar reference numerals, and, to not unduly encumber the figures, some elements may not be indicated on some figures if they were already identified in one or more preceding figures. It should also be understood herein that the elements of the drawings are not necessarily depicted to scale, since emphasis is placed upon clearly illustrating the elements and structures of the present embodiments.

Some embodiments of the present may be useful in the field of animal bedding installation. Embodiments of the stall floor assembly described herein are designed for allowing cows or other animals to sleep in their natural sleeping position, i.e. with their nose in a lifted position, while avoiding direct contact between the cows and an uncomfortable surface (e.g. concrete).

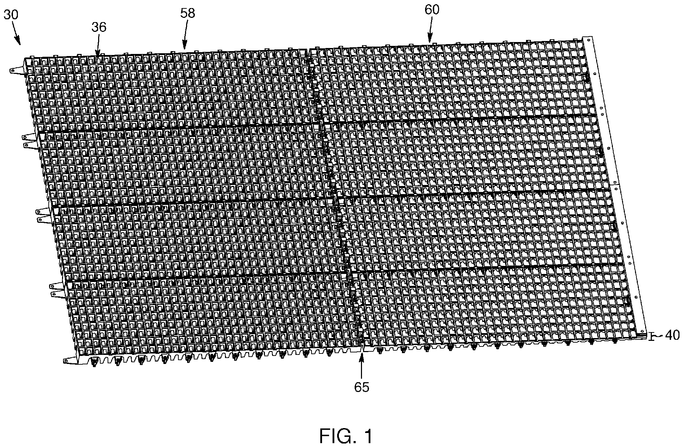

Referring to FIGS. 1 to 2, an embodiment of a stall floor assembly 30 for an animal bedding assembly is shown.

Generally described, the stall floor assembly 30 has a front end 32 and a rear end 34 and a plurality of floor sections 36. It will be understood by one skilled in the art that the designation of the front and rear ends may be arbitrary, and that in the context of the present description the front of the stall floor assembly will be understood as the end destined to receive the head of the cow for ease of reference only. The plurality of floor sections 36 are assembled together to form an inclined support surface 38. The front and rear ends of the inclined support surface coincide with the front and rear ends 32,24 of the plurality of floor sections 36. When assembled, the inclined support surface 38 forms a substantially continuous slope 40 from the front end 32 to the rear end 34 of the stall floor assembly.

The expression "inclined support surface" herein refers to a surface for supporting cows or other animals and making an angle with a plane formed by a stall floor (or parallel to the stall floor). The angle formed between the inclined support surface 38 and the stall floor will be referred to as a "slope" (i.e. the substantially continuous slope 40).

As it will be readily understood, the expression "substantially continuous slope 40" herein refers to a downward slant or inclination extending from the front end 32 to the rear end 34. The expression "substantially continuous" herein refers to a property of the slope of being substantially the same (i.e. "constant") along a given axis (e.g. a longitudinal axis). It will be readily understood that in some implementations the inclined surface may have some slope variations either locally (i.e. defining an uneven texture) or globally (i.e. the slope could vary along the given axis to form, for example, a small arc of circle) without departing from the scope of the invention, inasmuch as the resulting inclination provides the desired natural sleeping position. The slope may further be useful, for example, to guide fluids (from the animals or other sources) from one end to another end of the stall floor assembly 30.

In the illustrated embodiments, the inclined support surface 38 is substantially flat and the substantially continuous slope may be comprised between 2 and 4%. Alternatively, the substantially continuous slope 40 could range from 0.5 to 6%. In one implementation, the substantially continuous slope 40 is about 2%. In another implementation, the substantially continuous slope 40 is about 4%.

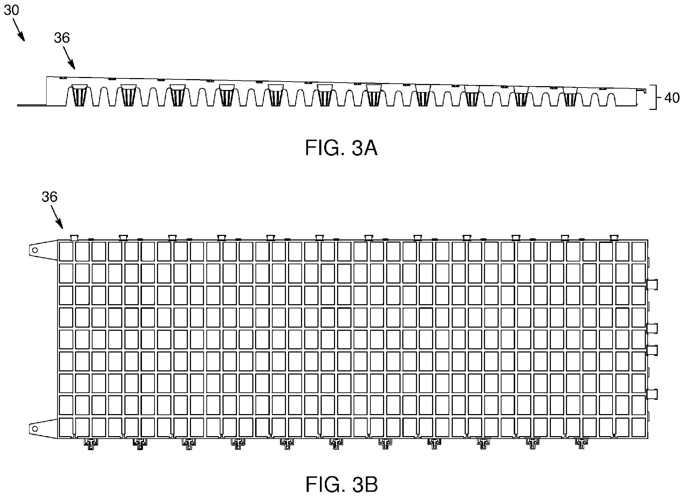

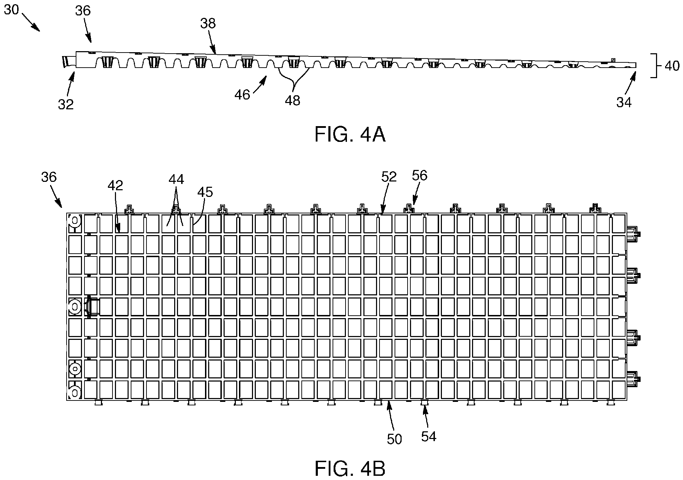

In some embodiments, and as better illustrated in FIGS. 3 and 4, each floor section 36 may have substantially rectangular cross-section (taken in a plane parallel to the stall floor) and the inclined support surface 38 may have a rectangular shape, to match the shape of a typical animal stall. Alternatively, the floor sections 36 and/or the inclined support surface 38 could have a different shape such as, but not limited to square, diamond, parallelogram, other quadrilateral, or any other polygons that can be assembled together to form the stall floor assembly 30.

In some embodiments, the floor sections 36 may be wedge-shaped. The floor sections 36 may have, for example, a thicker end (e.g. the front end 32) continuously tapering to a thinner end (e.g. the rear end 34).

Longitudinally, the floor sections 36 may have a length (i.e. the distance between the front end 32 and the rear end 34 measured in a plane parallel to the stall floor) comprised between 35 and 36 inches. In one variant, the length is about 35.825 inches. Transversally, the floor sections 36 may have a width (i.e. the distance between two opposite sides that are different than the front end 32 and the rear end, measured in a plane parallel to the stall floor) comprised between 11 and 12 inches. In one variant, the length is about 11.935 inches.

In the variant illustrated in FIG.3, the floor section 36 may have a front edge (located near the front end 32) having a thickness comprised between 1 and 2 inches. The thickness may be, for example, about 1.74 inches. The floor section 36 may also have a rear edge having a thickness (different than the thickness of the front edge) comprised between 1 and 2 inches. The thickness may be, for example, about 1.024 inches.

In the variant illustrated in FIG.4, the floor section 36 may have a front edge (located near the front end 32) having thickness comprised between 1 and 2 inches. The thickness may be, for example, about 1.016 inches. The floor section 36 may also have a rear edge having a thickness (different than the thickness of the front edge) comprised between 0.2 and 1 inch. The thickness may be, for example, about 0.3 inch.

As it has been previously mentioned, the floor sections 36 may be assembled with one another to form the stall floor assembly 30. For example, the floor section 36 illustrated in FIG. 3 could be longitudinally assembled with the floor section 36 illustrated in FIG. 4 to form a stall floor assembly 30 having a length of about 72 inches (i.e. approximately 6 feet) and a width of about 12 inches (i.e. 1 foot), and forming the substantially continuous slope 40 along the two floor sections. Different stall floor assembly configurations will be described in greater details below.

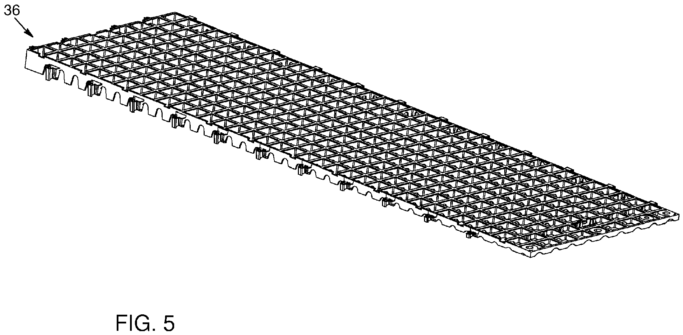

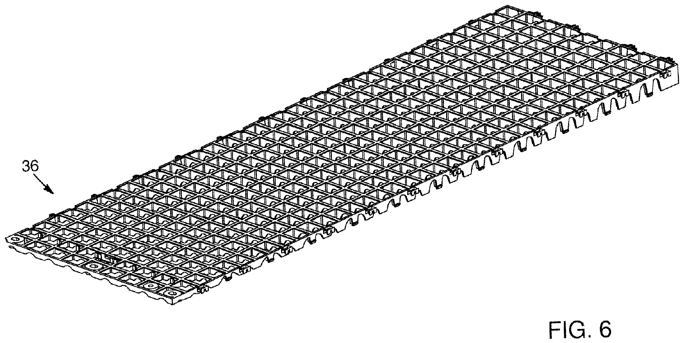

Now referring to Figures 3 to 6, each floor section 36 may be made of a mesh structure 42. As illustrated, the mesh structure 42 forms a network of contiguous cells 44. The mesh structure 42 may be useful, for example, for reducing moisture, condensation, and/or the presence of bacteria under the floor section 36. The mesh structure 42 may also be useful for allowing an improved air circulation under the stall floor assembly 30 formed by the floor sections 36.

In one variant, each cell 44 may have a substantially rectangular cross-section. It will be readily understood that the shape of the cross-section of the cell 44 may vary according to one's needs, and may be, for example, square, diamond, parallelogram, any other polygons (e.g. triangle, quadrilateral, pentagon and hexagon), combination thereof, or any other shape allowing to form the mesh structure 42.

In some embodiments, each cell 44 may be contiguous to at least two other cells 44. For example, some cells 44 (e.g. the ones located in each corner of the floor sections 36) may be contiguous to three other cells 44. Some cells 44 (e.g. the ones located near a center portion of the floor sections 36) may be contiguous to eight other cells 44.

In some embodiments, the network of contiguous cells 44 may be formed of cells being in fluid communication with one another, hence allowing air circulation under at least a portion (or alternatively, an entirety) of the floor sections 36. For example, each cell 44 may have opened sidewalls 45 and opened top and bottom portions, so as to allow the air may to freely flow from one cell 44 to another.

In some implementations, each floor section 36 may include an abutment structure 46 configured to abut against the stall floor (not illustrated). For example, the abutment structure 46 may include a plurality of feet 48 projecting from the mesh structure 42 opposite the inclined support surface 38. It will be understood that the abutment structure could be embodied by different elements such as, but not limited to leg(s), recess(es), combinations thereof, or any other element protruding or projecting from the mesh structure 42 in a direction opposite the inclined support surface 38. The abutment structure 46 may be useful, for example, for supporting the floor section 36 by maintaining a distance between the stall floor and the inclined support surface 38, while ensuring air circulation under its surface.

In some embodiments, each floor section 36 may include two opposite lateral sides 50,52. Each floor section 36 may include at least one male connector 54 and at least one female connector 56. For example, a plurality of male connectors 54 may be provided on one of the two opposite lateral sides (e.g. the side 50), and a plurality of female connectors 56 may be provided on the other one of the two opposite lateral sides (e.g. the side 54). The male connectors 54 and the female connectors 56 of laterally adjacent floor sections may be engaged together.

In one example of implementation, the at least one male connector 54 is a row of male connectors and the at least one female connector 56 is a row of female connectors. The rows of male and female connectors may each at least one male or female connectors. For example, the row of at least one male and the row of at least one female connector may each comprise 11 connectors (i.e. 11 male connectors are provided on the lateral side 50, and 11 female connectors are provided on the opposite lateral side 52). It will be readily understood that the number and configuration of connectors may differ from the illustrated embodiment without departing from the scope of the invention.

Alternatively, in one embodiment, the two opposite lateral sides 50,52 may each comprise a combination of male and female connectors. For example, each one of the two opposite lateral sides could comprise a sequence of male and female connectors (e.g. an alternating sequence). It will be readily understood that while male and female connectors are illustrated, they could be replaced by any other mechanical connectors (e.g. snap-lock, buttons, clips, or the like).

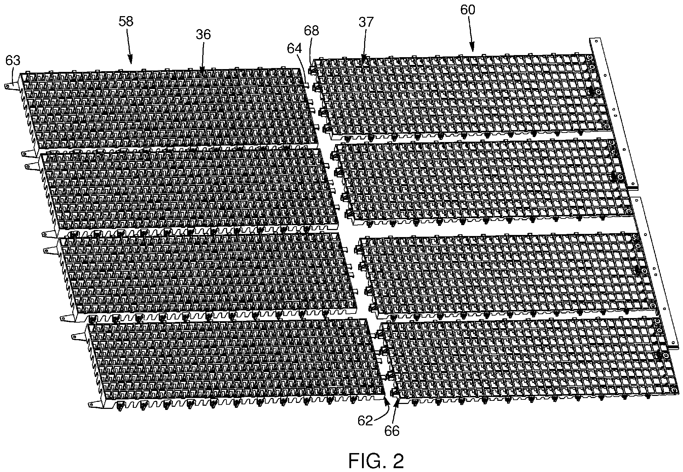

As better illustrated in FIGS. 1 and 2, the plurality of floor sections may be assembled into first and second coterminous rows 58, 60.

In some embodiments, the floor sections of the first row 58 may each have a rear boundary 62 provided with at least one male connector 64 and the floor sections of the second row 60 may each have a front boundary 66 provided with at least one female connector 68 engaged with the at least one male connector 64 of a neighboring floor section of the first row. Similarly to the at least one male and the at least one female connectors 54, 56 which have been previously described, the at least one female connector 68 and the at least one male connector 64 may be embodied by a row of connectors and/or be replaced by any other mechanical connectors.

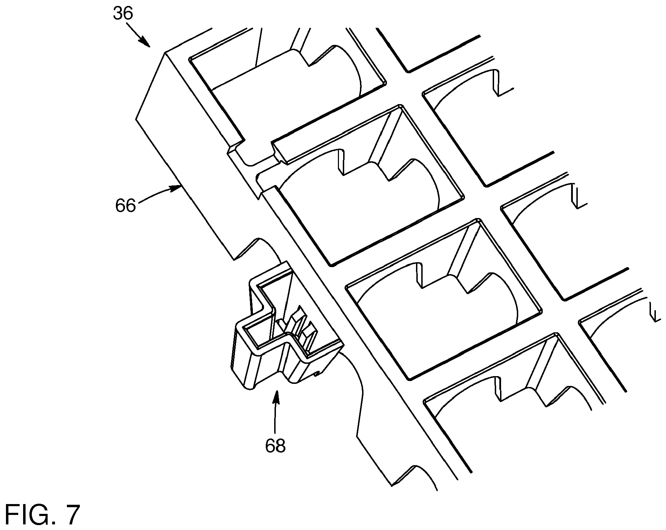

FIG. 7 illustrates an enlarge view of front boundary 66 of a floor section 36 of the second row 60. As illustrated, the front boundary 66 includes the at least one female connector 68.

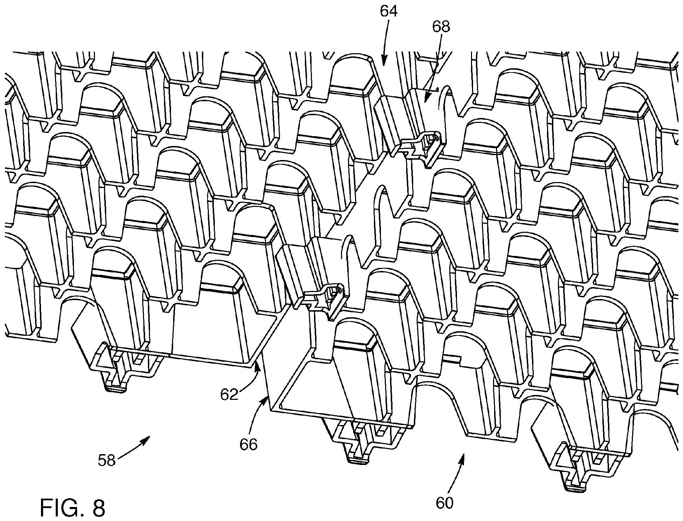

FIG. 8 illustrates a floor section of the first row 58 about to be engaged with a floor section of the second row 60. Each male connector 64 of the first row 58 may be engaged with a corresponding female connector 68 of the second row 60 at an interface 65 formed by the rear boundary 62 and the front boundary 64.

As it has been previously mentioned, the stall floor assembly may comprise a plurality of floor sections 36 (see, for example, FIG. 1). In one example of implementation, the stall floor assembly 30 comprises two rows each comprising four floor sections (i.e. the first row of floor sections 58 comprises four floor sections 36 and the second row 60 comprises four floor sections 36), resulting in an stall floor assembly 30 made of 2 x 4 floor sections (rows x columns). For example, the resulting assembly 30 may have a width of about 4 feet and a length of about 6 feet.

As it will be understood, each floor section 36 may be designed, sized and configured to form stall floor assemblies 30 that are compatible with the standards of cattle and dairy industries. Such standards may vary from one country to another (because of the legislation, preferences, and/or other factors). For example, the standards for the floor section's length is typically comprised between 66 to 72 inches.

In some embodiments, each floor section may be made of a polyethylene thermoplastic material. Alternatively, each floor section could be made from plastic or rubber.

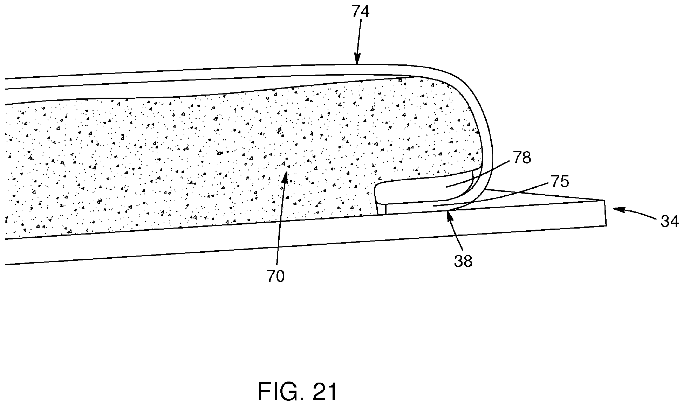

In some embodiments, the assembly 30 may further include a mattress 70 provided on the inclined support surface 38 (as illustrated, for example, in Figure 21). For example, the mattress 70 may be made of rebound foam and may be added onto the inclined support surface 38 to ensure a more comfortable bedding assembly 30 for the cows (or other animals). Alternatively, the mattress 70 may be made from rubber, fiber from used vehicle tires, or the like.

In one implementation, the mattress 70 has a top surface 72, and the assembly 30 further includes a protective layer 74 provided on the top surface of the mattress, extending along one of its side and folded under a portion of the mattress 70. For example, the protective layer 74 may be an impervious membrane to prevent absorption of fluids by the floor sections 36 or prevent the fluids to flow under stall floor assembly 30. In one variant, the protective layer 74 is made from rubber. Alternatively, the protective layer 74 could be made from textile membrane, fabric, polyethylene, closed-cell foam, open-cell foam, foam-based materials, rubber-filled materials, latex, polyurethane, or combinations thereof.

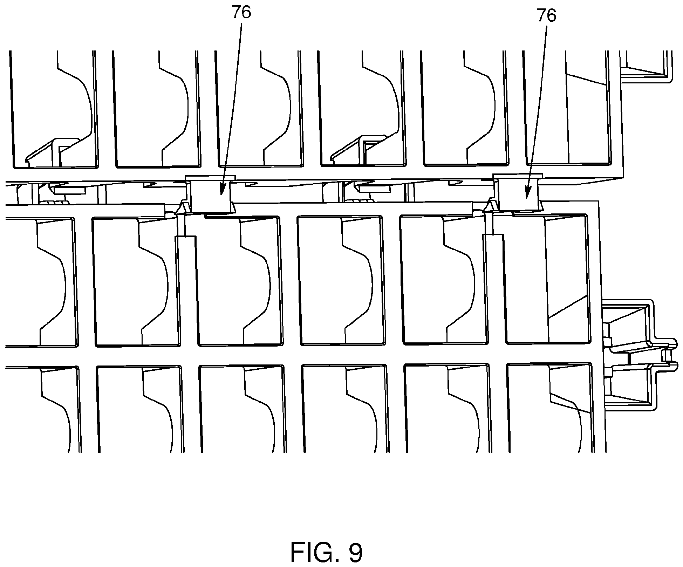

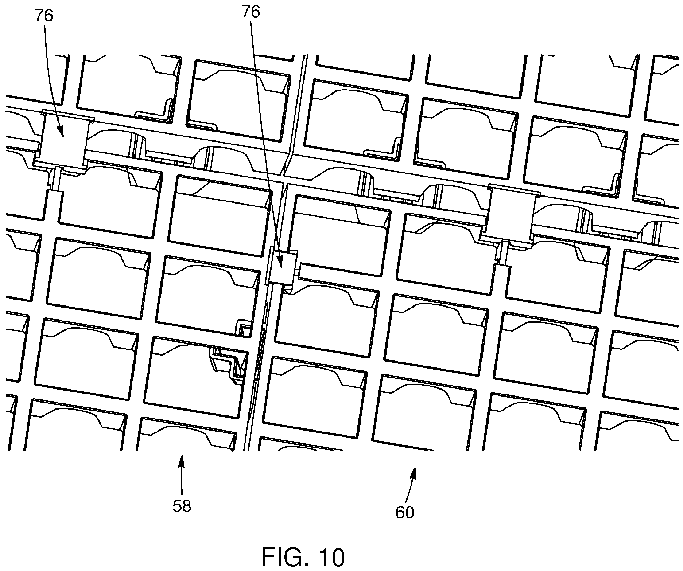

Now referring to FIGS. 9 and 10, the assembly may further comprise a plurality of clips 76. Each clip 76 is engaged with a pair of adjacent floor sections 36. For example, the clips 76 may be used to mechanically join (e.g. attach) two adjacent floor sections 36 along their respective lateral sides 50, 52. The clips 76 may also mounted near the interface 65 formed by the rear boundary 62 of the floor sections of the first row 58 and the front boundary 66 of the floor sections of the second row 60 so as to mechanically join (e.g. attach) the first and second rows 58,60 longitudinally (i.e. along the interface 65).

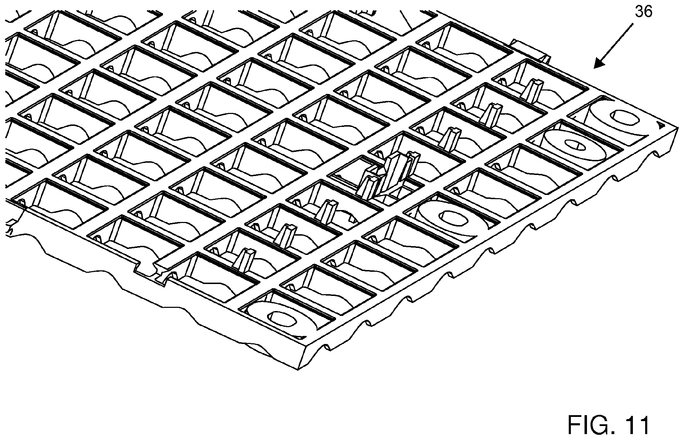

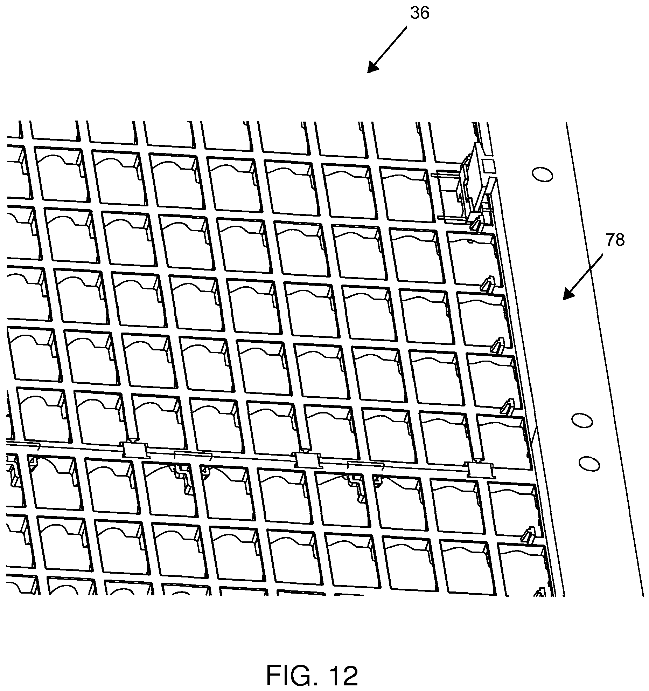

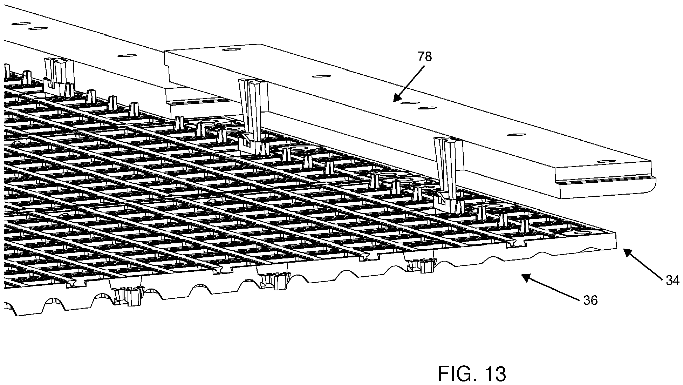

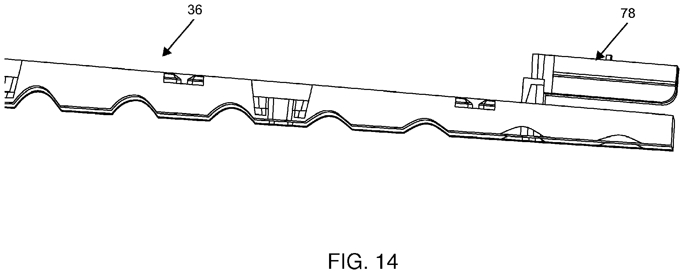

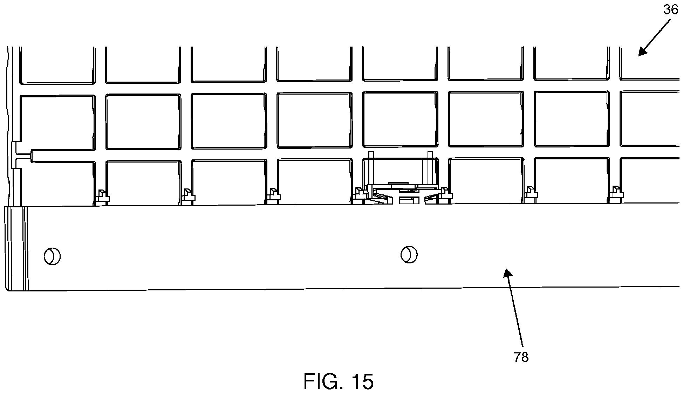

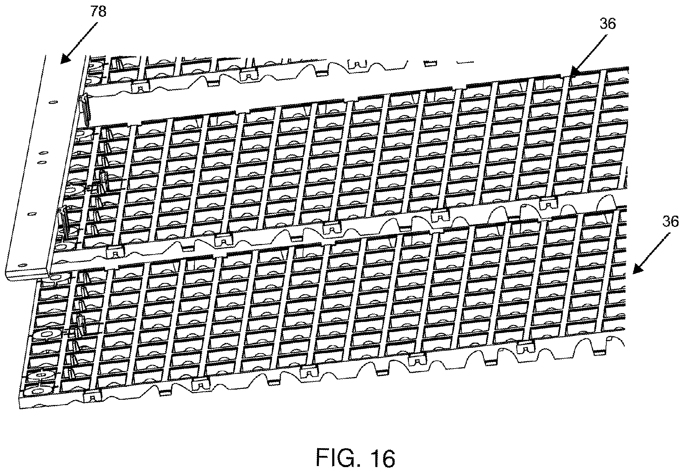

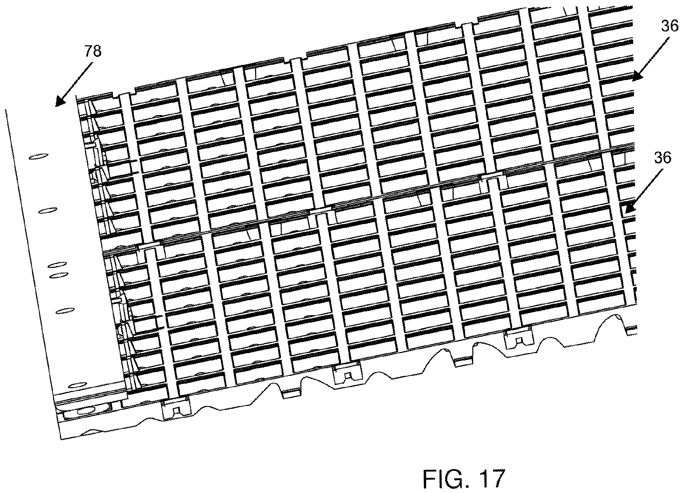

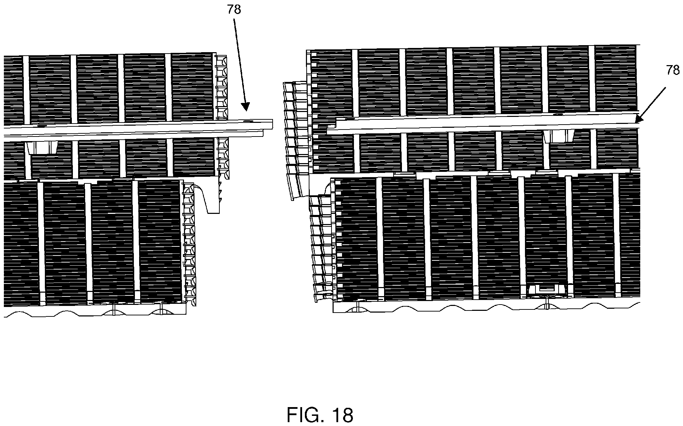

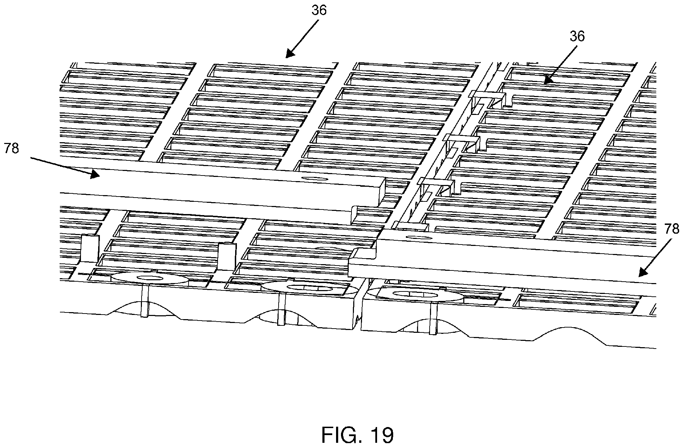

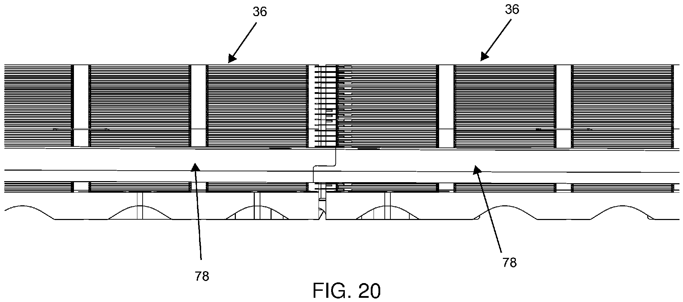

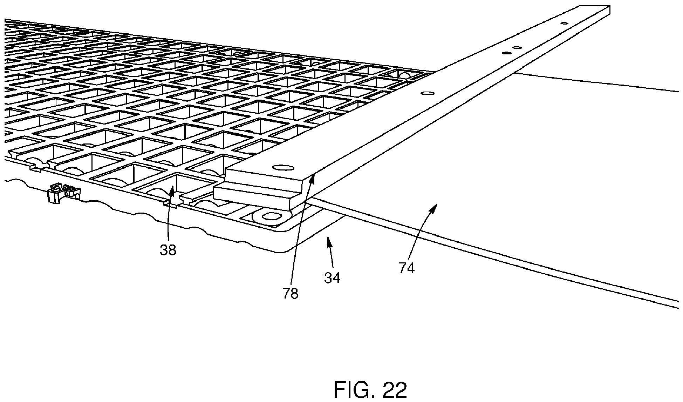

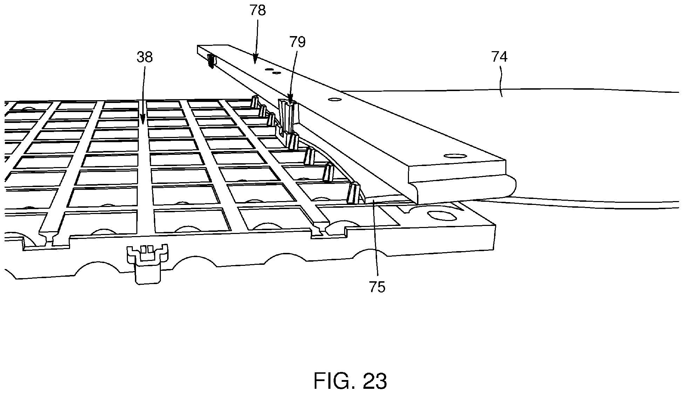

In some embodiments, illustrated in Figures 11 to 23, the protective layer 74 has one terminal edge 75. The terminal edge 75 is the edge that is disposed near the rear end 34 of the stall floor 30 when the protective layer 74 is installed on the mattress 70 and may be folded under a portion of the mattress 70.

The assembly 30 may include a positioning band 78 mounted on the inclined support surface 38, near the rear end 34, for engaging the terminal edge 75 with the inclined support surface 38. The positioning band 78 is engageable with the inclined support surface 38 through appropriate attachment means 79. The attachment means may include, but are not limited to engageable and releasable connectors, such as male and female connectors, snap-lock, buttons, clips, or the like. Alternatively, any other mechanical connectors could be used.

More particularly, the terminal edge 75 of the protective layer 74 may be squeezed between the inclined support surface 38 and the positioning band 78, when the latter is engaged with the inclined support surface 38 (through the attachment means 79), so as the terminal edge 75 is firmly held in place near the rear end 34. The positioning band 78 may then be useful, for example, for aligning the mattress 70 with the protective layer 74 along the length of the floor section 36 and/or ensure an appropriate alignment of the protective layer 74.

In some embodiments, a plurality of male connectors may be provided on the positioning band 78, while a corresponding plurality of female connectors may be provided on the inclined support surface 38 (or vice versa). The male connectors and the female connectors may be engaged together. In one example of implementation, the positioning band 78 is provided with two male connectors. Of course, number and configuration of connectors may differ from the illustrated embodiment without departing from the scope of the invention.

The dimensions of the positioning band 78 is such that its length (i.e. the dimension parallel to the rear end 34) may substantially be the same as the width of each floor section 36. Therefore, the floor assembly 30 may comprise a plurality of positioning bands 78. For example, the number of positioning bands 78 may be the same as the number of floor sections 36 in the second row 60 of the floor assembly 30 (e.g. four positioning bands 78 for four floors sections 36 in the second row 60). Optionally, the positioning band 78 may be engageable with the positioning band 78 of a neighbouring floor section 36. Alternatively, the number of positioning bands 78 may be different than the number of floor sections 36 in the second row 60 of the floor assembly 30 (e.g. one positioning band 78 for four floors sections 36 in the second row 60).

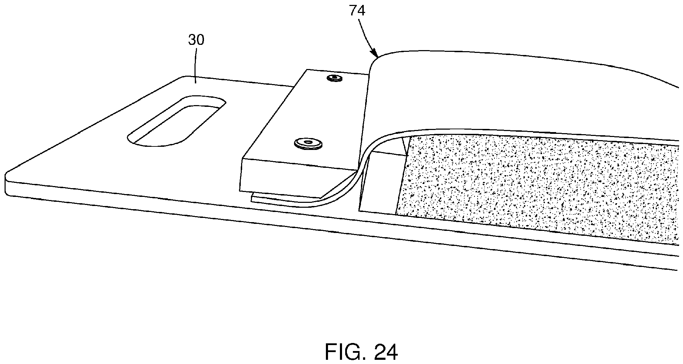

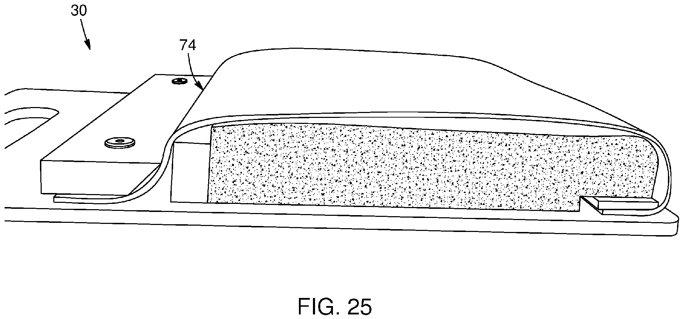

Now referring to Figures 24 and 25, the protective layer 74 may be fixed to the ground of the stall near the front end 32 (at an edge opposite the terminal edge 75). In the illustrated variant, a plastic band engages the edge of the protective layer 74 against the ground, and the plastic band is affixed to the ground with attaching means, fasteners or the like, such as, but not limited to screws, bolts, nails, combinations or variants thereof. Alternatively, the protective layer 74 may be directly affixed to the ground (i.e. without band), or the band may be made from metal, wood, or any other materials suitable for fixing the protective layer 74. In some embodiments, the edge of the protective layer 74 may be "free" (i.e. not attached or affixed to the ground).

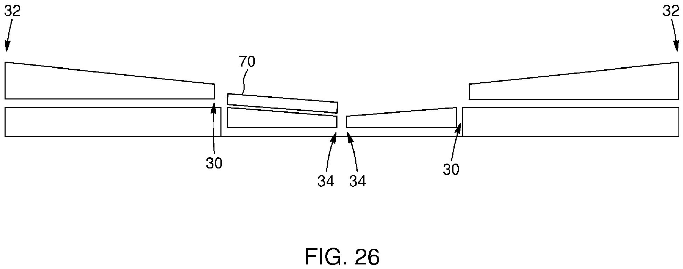

In one embodiment illustrated in Figure 26, the stall floor assembly 30 may be mounted in a passage (i.e. a corridor) of an animal housing. In the illustrated variant, first and second subsets of floor sections are disposed in a mirror configuration contiguously along their rear ends. More particularly, the rear end 34 of the first subset 30 is put in contact with the rear end 34 of the second subset in a central portion of the assembly (referred to as "the resulting assembly"). The resulting assembly includes a first and a second slopes directed from an external portion (formed by the front end 32 of each of the assembly 30) towards the central portion. More particularly, the first slope extends from the front end 32 to the rear end 34 of the first assembly, and the second slope extends from the front end 32 to the rear 34 of the second assembly. The resulting assembly has a V-shaped cross-section and may be provided with a mattress 70. It will be readily understood that the first and second slopes may be the same, or different, according to one's needs. Such configuration may be useful, for example, for guiding fluids from the external portion towards the central portion of the resulting assembly.

Of course, numerous modifications could be made to the embodiments described above without departing from the scope of the appended claims.

## Claims

1. A stall floor assembly for an animal housing including bedding installations and/or passages, the assembly comprising:
a plurality of floor sections assembled together to form an inclined support surface having a front end and a rear end, the inclined support surface forming a substantially continuous slope from the front end to the rear end.

2. The assembly according to claim 1, wherein the slope is comprised between 0.5 and 6%.

3. The assembly according to claim 1 or 2, wherein each floor section is made of a mesh structure, the mesh structure forming a network of contiguous cells.

4. The assembly according to claim 3, wherein each floor section comprises an abutment structure configured to abut against a stall floor.

5. The assembly according to claim 4, wherein the abutment structure comprises a plurality of feet projecting from the mesh structure opposite the inclined support surface.

6. The assembly according to any of claims 1 to 5, wherein each floor section comprises:
two opposite lateral sides;
at least one male connector provided on one of the two opposite lateral sides; and
at least one female connector provided on another one of the two opposite lateral sides,
wherein the at least one male connector and the at least one female connector of laterally adjacent floor sections are engaged together.

7. The assembly according to any of claims 1 to 6, wherein the plurality of floor sections is assembled into first and second coterminous rows.

8. The assembly according to claim 7, wherein the floor sections of the first row each have a rear boundary provided with at least one male connector and the floor sections of the second row each have a front boundary provided with at least one female connector engaged with the at least one male connector of a neighboring floor section of the first row.

9. The assembly according to claim 7 or 8, wherein the first row of floor sections and the second row of floor sections each comprises four floor sections.

10. The assembly according to any of claims 1 to 9, wherein each floor section is made of a polyethylene thermoplastic material.

11. The assembly according to any of claims 1 to 10, further comprising a mattress provided on the inclined support surface.

12. The assembly according to claim 11, wherein the mattress has a top surface, the assembly further comprising a protective layer provided on the top surface of the mattress.

13. The assembly according to claim 12, wherein the protective layer has one terminal edge, the assembly further comprising a positioning band mounted on the inclined support surface and engaging the terminal edge with said inclined support surface.

14. The assembly according to any of claims 1 to 13, further comprising a plurality of clips each engaged with a pair of adjacent floor sections.

15. The assembly according to any of claims 1 to 14, comprising first and second subsets of said floor sections disposed in a mirror configuration contiguously along their rear ends.
